# EUROPEAN PATENT SPECIFICATION

(11) **EP 0 520 933 B1**
(45) Date of publication and mention of the grant of the patent: **17.12.1997**
(21) Application number: 92500083.8
(22) Date of filing: 25.06.1992
(51) Int. Cl.: H02B 13/035

(54) **Coupling system for electric switchgear modules in transformation centres and the like**
Kupplungssystem für elektrische Schaltmodule in Transformatorenstationen und dergleichen
Système d'accouplement pour modules de commutation électrique dans les centres de transformation et équivalent

(30) Priority: 26.06.1991 ES 9101510
(43) Date of publication of application: 30.12.1992
(73) Proprietor: Ormazabal Ocerin, Javier, 48330 Lemona (Vizcaya) (ES)
(72) Inventor: Ormazabal Ocerin, Javier, 48330 Lemona (Vizcaya) (ES)
(74) Representative: Carpintero Lopez, Francisco

(56) References cited:
- EP-A- 0 199 891
- EP-A- 0 338 382
- EP-A- 0 437 762
- DE-A- 2 729 571
- DE-A- 2 910 349
- DE-U- 7 113 792
- FR-A- 1 362 997

## Description

### OBJECT OF THE INVENTION

The present invention relates to a new coupling system for modular cells incorporating parts of the control and protective gear in medium and low voltage power transformation and distribution stations, which system has been specifically conceived in order for coupling between such cells to be effected without the latter losing their leakproof characteristics and hence without losing the gas protecting the equipment they contain in the coupling operation, moreover for the actual coupling means to be functionally insensitive to pollution.

### BACKGROUND OF THE INVENTION

The use of lockers is well-known to house all of the electric units for controlling and protecting power transformation and distribution stations having a wholly leakproof and impervious structure in order for the equipment not to lose its electric characteristics due to environmental contamination and pollution that must be kept constant with a view to the equipment's adequate working.

The provision inside such lockers of a suitable gas, for instance hexofluoride, which helps to keep the electrical characteristics of the equipment mounted inside the locker unchanged is also well-known.

This system for protecting all of the units within a leakproof locker with a gas inside is hampered by two significant drawbacks:

On the one hand, the electric equipment or switchgear is almost immovable to the detriment of its versatility in the event of having to extend the same.

On the other hand, in the event of breakdown of or damage to one of the units of the equipment it will be necessary to reach into the locker to go about its repair or replacement, thereby for the imperviousness thereof to be lost and the insulating gas which protected the whole of the control and protection equipment to be released.

Modular cells are also known which contain in their interior a functional portion of the equipment and whose cells or modules are electrically connected to other adjacent cells or modules which incorporate supplementary functions. The various cells of this sort duly connected altogether determine the control and protection equipment in each case.

It can be inferred from the above that using functional cells or modules is advantageous in that the equipment can eventually be modified, both extending and reducing the functional structure thereof.

However, a serious drawback is that since the cells or modules are not leakproof, they cannot retain the gas inside and the units they contain can and in fact suffer the adverse climatic or contaminating consequences.

European patent application EP-A-0 338 382 discloses a coupling system for encapsulated electric switchgear modules in which opposite sides of each module are provided with aligned male and female contacts located in cup-shaped depressions in the module walls and passing sealingly therethrough. However, no provision is disclosed for protecting the electrical coupling assembly from environmental influences.

German Utility Model DE-U-71 13792 discloses a coupling system for encapsulated high-voltage modules in which an elongate insulated support with internal electrical connectors at its opposite ends is inserted past sealing means in the walls of two aligned modules to contact conductive tabs located within the gas envelope.

Document DE-A-2 910 349 discloses coupling means for connecting electric cables to encapsulated medium-voltage switchgear modules comprising cup-shaped cover guards sealingly inserted in holes in the module wall and each having an axially located conductive tab on its inner base.

Document EP-A-0 199 891 discloses a coupling system for encapsulated electric switchgear, wherein double-cup-shaped insulating supports are sealingly inserted in facing holes in two modules to be coupled together. Bus bars pass axially through respective supports to enter the modules in a sealed manner, the bars being provided at the smaller bases of the outer cups with male and female connectors, respectively. An insulating sleeve with inner and outer conductive layers is pushed over the outer cup of a first module and the second module is then approached to the first until the male and female connectors engage while the outer cup of the second module is received in the insulating sleeve.

Document FR-A-1 362 997 discloses a coupling system for connecting sections of bus bar. Each section is provided at its ends with a male connector tab located in the bottom of a cup-shaped depression. Adjacent sections are connected by means of a connector comprising an insulating outer tube surrounding a length of metal tubing, within which are arranged axially a number of electrically conductive connector parts. When the ends of the connector are inserted in the cup-shaped depressions of adjacent bus bar sections, the connector parts are urged by springs into contact with the male connector tabs.

### DESCRIPTION OF THE INVENTION

The coupling system for control cells or modules in transformation centres, power transformation and distribution centres subject of the present invention, as defined in the appended claim 1, relying upon the use of cells or modules housing therewithin parts or functions of the control equipment, fully solves the above-mentioned leakproof problem, allowing inter-modular coupling to take place in perfectly leakproof conditions such that the contents thereof are not only isolated and protected from the environmental effects and weather exposure, but can moreover be assisted by an environmental conditioning gas without the latter being released at any time.

In addition to the said leakproof coupling, the system renders the actual means used for electrical coupling functionally insensitive to pollution.

More specifically and in order to achieve the above, the coupling system subject hereof relies upon the establishment in each module of as many holes as couplings must be made with the adjacent module, such holes to be located so that during normal inter-modular coupling they shall appropriately face each other, each such hole being provided with a sort of pan or cover-guard provided at its mouth with a perimetric enlargement through which it abuts upon the mouth of the hole, against which it is rendered leakproof with the preferred assistance of an annular sealing gasket and to which it is attached with the assistance of a flange, whilst the cover-guard body penetrates inside the module, such body incorporating at its bottom an axial hole in which the relevant lead tab shall be provided, as shall become apparent hereinafter.

The system is supplemented by an insulating mount designed to be inserted jointly and snugly in two cover-guards that operatively face each other and are provided for two adjacent modules, which insulating mount is tubular in shape, with another, and constituting one of the invention elements, slightly imbued or external semi-conductive layer at its mid-point that in turn has a perimetric rim through which the said semi-conductive layer can be connected to earth.

Inside the said insulating mount is a metal tubing duly attached to the said mount with the conductor as such inside, such comprising a number of conductive parts disposed at the generatrices of an imaginary cylindrical surface, or appropriate geometry, in turn defining an axial duct upon which the said conductive parts tend to close by action of springs or coils clamping the same.

In order to ensure that the insulating mount is joined to the metal tubing, the former could be provided with a semi-conductive layer (not shown) upon the surface in contact with the metal tubing.

Furthermore, and as aforesaid, the bottom of each pan or cover-guard has a conductive tab, mounted upon the relevant insulating mount that is fixed at the hole on the bottom of the cover-guard and in respect of which it is sealed using an annular sealing gasket, or adequate means, such conductive tab being conceived for its inner end to receive the relevant conductor and its outer end being designed to be inserted in the housing defined by the group of above-mentioned conductive parts, between which it penetrates against the resilient stretch of the springs or coils with which they are provided.

A fundamental part of the invention lies in the establishment of a group of conductive parts moreover established within the metal tubing with the assistance of a number of elastic bands that allow the said conductive assembly a certain mobility, in order for the conductive tabs to fit in snugly.

Another of the invention improvements consists in the possibility to use stoppers that allow the cover-guards or pans to be sealed when they are not used as means for inter-modular connection.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

Figure 1.- Is a partial close side elevation view of two switchgear modules for transformation centres joined by means of the coupling system subject of the present invention.

Figure 2.- Is a cross-section of the same close view of the above figure, showing therein all of the elements which make up the system.

Figure 3.- Is finally a cross-section close view of one of the stoppers designed to be used when electrical connection with another module is not required in any of the cover-guards or pans.

### PREFERRED EMBODIMENT OF THE INVENTION

In the figures set forth above numbers (1) and (1') are allocated to two switchgear modules designed to be coupled and connected to each other at a transformation centre and, in accordance with the coupling system subject hereof, each of the said modules is provided with a hole (2) at each interconnection point into which a preferably cup-shaped pan or cover-guard (3) can be fitted, its larger base being open and having a perimetric enlargement (4) with a groove for a likewise perimetric joint (5) to be fitted, the pan or cover-guard (3) being fitted to the module body (1) with the assistance of a flange (6) which is screwed (7) to such module, and which is provided with a wide central hole (8) operatively facing the cover-guard (3) mouth, which cover-guard is designed to be largely inserted inside the module (1) and is at the same time provided at its smaller or inner base with a hole (9) coaxial with the mouth but with a rather smaller diameter.

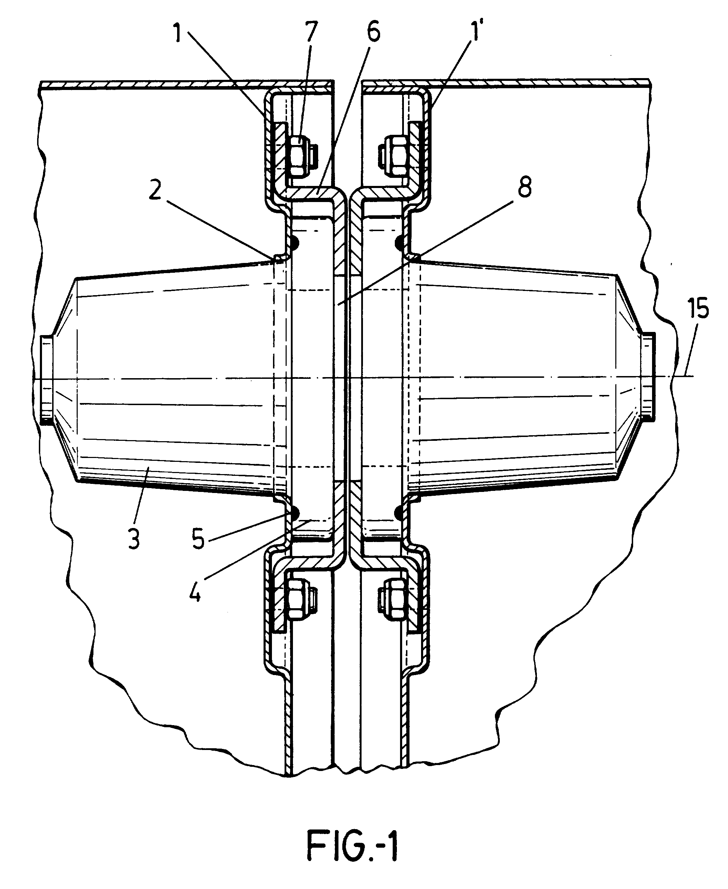

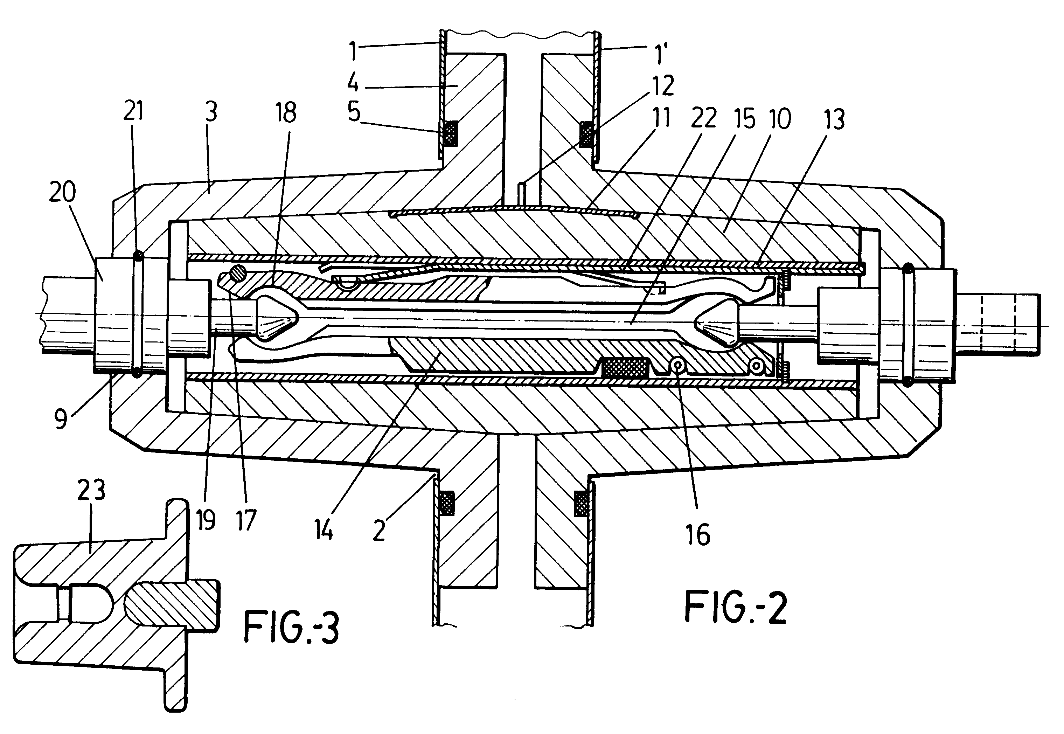

The holes (2) into which the cover-guards or pans (3) are inserted are located in the modules (1-1') such that upon the coupling of such modules, as shown in figures 1 and 2, the cover-guards (3) face each other coaxially.

The coupling system is supplemented with an insulating mount (10) comprising two tapered sectors opposite each other that can respectively be inserted into the two facing cover-guards or pans (3), such insulating mount (10) being tubular in shape and provided at the mid-point of its outer or slightly imbued face with a semi-conductive layer (11) whose centre is in turn provided with an outwardly projecting perimetric rim (12) through which the said semi-conductive layer (11) is connected to earth, the interior of the repeatedly mentioned insulating mount (10) carrying a metal tubing (13) which projects through the two free ends thereof and which in turn constitutes the housing for the conductive elements as such, specifically comprising a number of metallic conductive parts (14) which are as aforesaid disposed at the generatrices of an imaginary cylindrical surface and which tend to clamp themselves about the shaft (15) of the assembly with the assistance of springs or coils (16).

These conductive parts (14) have bevelled fronts (17) just before round recesses (18) in order to facilitate access into the same of two tabs (19) that project from the front of the contactor (20) mounted upon the hole (9) of the smaller base of the cover-guard (3), an O-ring seal (21) or any other suitable means being provided to help seal the union.

The conductive parts (14) have also been provided to be duly positioned within the metal tubing (13) by using bands (22) such that the conductive assembly can swivel somewhat laterally with respect to the shaft (15) of the assembly, in order to achieve a perfect fit for the conductive tabs (19) in the event of potential slight axial misalignments between the cover-guards or pans (3) in mounting the modules (1-1').

Modules shall naturally exist wherein one or more of the cover-guards or pans (3) shall be inoperative, for instance in expectation of adding new modules, in which case the said cover-guards are sealed with a stopper (23), for instance as shown in detail in figure 3, though the stopper is naturally merely illustrated in token of example and can be replaced with any other stopper.

In accordance with the structure described, the coupling system for electric switchgear modules in transformation centres subject of the invention, in addition to allowing any extension of the equipment by furnishing new modules, is insensitive to pollution and adverse environmental conditions, ensuring that the inter-modular connection is sealed and, given the conductive assembly's buoyancy, that potential maladjustments or misalignments in facing the conductive tabs (19) in two adjacent modules are offset.

## Claims

1. A coupling system for electric switchgear modules in transformation centres and the like, comprising:
facing holes (2) in adjacent modules (1, 1') which are to be electrically connected to each other;
a plurality of cup-shaped cover guards or pans (3), each of which can be fitted into a respective hole (2) with its body portion reaching into the module up to a position of sealing abutment of a perimetric enlargement (4) at its mouth against the wall of the module;
a conductive tab (19) axially located within each said cover guard (3) and passing sealingly through a hole (9) in the smaller or inner base thereof to project from a connection (20) located within the module,
each pair of facing cover guards (3) cooperating with a double-cup-shaped support, opposite ends of which fit snugly within respective cover guards (3), the said support comprising a generally tubular envelope (10) of insulating material surrounding a metal tube (13), within which a number of electrically conductive parts (14) are arranged coaxially with the said conductive tabs (19) and are fitted with springs or coils (16) which hold the conductive parts (14) against the conductive tabs (19),
whereby said conductive parts (14) cooperate with elastic bands (22) which allow the conductive parts (14) some lateral movement to offset a potential misalignment of the conductive tabs (19), and the insulating envelope (10) is provided on its outer surface with a semi-conductive layer (11) arranged between the insulating envelope (10) and the pans or cover guards (3) and having a central outwardly projecting perimetric rim (12), the layer (11) acting as an electric shield outside the support allowing it to be connected to earth and controlling the electric field, which shall be independent of the external environment.

2. A coupling system for electric switchgear modules in transformation centres and the like, as in claim 1, wherein, when electric connection to another module is not required, an electrically insulating cover or seal (23) is provided to seal the cover guard (3) and electrically insulate the conductive tab (19) located at the bottom thereof.

## Patentansprüche

1. Kupplungssystem für elektrische Schaltmodule in Transformatorenstationen und dergleichen mit:
gegenüberliegenden Öffnungen (2) in benachbarten Modulen (1 - 1'), die elektrisch miteinander gekoppelt werden sollen;
einer Reihe von halbkreisförmigen Schutzdeckeln oder Abdeckungen (3), die mit dem in das Modul eindringenden Teil ihres Körpers bis zur Anschlagstellung einer perimetralen Verbreitung (4) der Mündung gegen die Wand des Moduls jeweils in entsprechende Öffnungen (2) eingesetzt werden können;
einer leitenden Endklemme (19), die axial in den einzelnen Schutzdeckeln (3) vorgesehen ist und dicht durch eine Öffnung (9) des kleineren bzw. inneren Bodens derselben dringt und von einem im Modul enthaltenen Anschluss (20) absteht;
wobei alle gegenüberliegenden Schutzdeckelpaare (3) mit einem doppelhalbkreisförmigen Halter zusammenwirken, dessen gegenüberliegende Enden fest in Schutzdeckel (3) eingesetzt werden, während der Halter eine allgemein rohrförmige Umhüllung (10) aus einem Isoliermaterial aufweist, welche ein Metallrohr (13) umgibt, in dem sich koaxial zu den leitenden Endklemmen (19) mehrere elektrisch leitende Elemente (14) befinden, die Federn oder Schraubenfedern (16) aufweisen, welche die Leitelemente (14) gegen die leitenden Endklemmen (19) drücken,
dadurch gekennzeichnet, dass die Leitelemente (14) mit elastischen Bändern (22) zusammenwirken, die den Leitelementen (14) eine gewisse seitliche Bewegung ermöglichen, um eine eventuell mangelnde Ausrichtung der leitenden Endklemmen (19) auszugleichen, und dass die Isolierumhüllung (10) an ihrer Aussenfläche mit einer zwischen der Isolierumhüllung (10) und den Schutzdeckeln oder Abdeckungen vorgesehenen Halbleiterschicht (11) versehen ist, die eine nach aussen vorstehende mittige Umfangswulst aufweist, wobei diese Schicht (11) aussen am Halter als elektrische Abschirmung dient, dessen Erdung ermöglicht und das von der äusseren Umgebung unabhängige elektrische Feld steuert.

2. Kupplungssystem für elektrische Schaltmodule in Transformatorenstationen und dergleichen, nach Anspruch 1 dadurch gekennzeichnet, dass dann, wenn keine elektrische verbindung mit einem anderen Modul erforderlich ist, ein elektrisch isolierender Deckel bzw. Verschluss (23) vorgesehen wird, um den Schutzdeckel (3) zu versiegeln und die im unteren Bereich befindliche leitende Endklemme (19) elektrisch zu isolieren.

## Revendications

1. Système d'accouplement pour modules de commutation électrique dans les centres de transformation et équivalent, qui comprend:
des orifices les uns en face des autres (2) dans des modules adjacents (1, 1'), qui doivent être connectés électriquement entre eux;
une série de couvercles de protection ou des couvertures en forme semi-sphérique (3), dont chacun peut s'adapter dans un orifice respectif (2) avec la portion de leur corps qui arrive à l'intérieur du module jusqu'à une position de butée hermétique d'un élargissement de périmètre (4) à leur ouverture, contre la paroi du module;
une borne conductrice (19), située axialement dans chacun de ces couvercles de protection (3) et qui passe d'une manière étanche à travers un orifice (9) de la base inférieure ou intérieure de cette dernière, en se projetant à partir d'une connexion (20) située à l'intérieur du module,
chaque paire de couvercles de protection l'un en face de l'autre (3) coopérant avec un support en forme de double semi-sphère, dont les extrémités opposées s'adaptent fermement dans des couvercles de protection respectifs (3), ce support comprenant une enveloppe tubulaire (10) en général de matière isolante autour d'un tube métallique (13), dans lequel est disposée une série de pièces électriquement conductrices (14), coaxialement avec ces bornes conductrices (19) et comportant des ressorts hélicoïdaux (16) qui soutiennent les pièces conductrices (14) contre les bornes conductrices (19),
caractérisé par le fait que les pièces conductrices (14) coopèrent avec des bandes élastiques (22) qui permettent aux parties conductrices (14) un certain mouvement latéral, afin de compenser le manque d'alignement possible des bornes conductrices (19), et l'enveloppe isolante (10) est disposée sur sa superficie extérieure avec une couche semiconductrice (11) placée entre l'enveloppe isolante (10) et les couvercles ou couvertures de protection (3) et ayant un rebord de périmètre central, qui est projeté vers l'extérieur (12), la couche (11) servant de blindage électrique à l'extérieur du support, en lui permettant sa connexion à terre et en contrôlant le champ électrique, qui sera indépendant du milieu extérieure.

2. Système d'accouplement pour modules de commutation électrique dans les centres de transformation et équivalent, selon la 1ère revendication, caractérisé par le fait que, lorsque la connexion électrique à un autre module n'est pas requise, on place un couvercle ou une fermeture électriquement isolante (23) pour fermer le couvercle de protection (3) et isoler électriquement la borne conductrice (19) qui se trouve dans sa partie inférieure.
